# FASCICULE DE BREVET EUROPEEN

(11) **EP 3 932 804 B1**
(45) Date de publication et mention de la délivrance du brevet: **23.11.2022**
(21) Numéro de dépôt: 21162503.3
(22) Date de dépôt: 15.03.2021
(51) Int. Cl.: B64D 31/06, B60K 6/383, B60K 6/485, B60K 6/26, B60K 6/48, B60W 10/06, B60W 10/08, B60W 50/00, B64C 27/06, B64C 27/14

(54) **SYSTEME ET PROCEDE D'AIDE A LA SYNCHRONISATION D'UNE ROUE LIBRE ET VEHICULE ASSOCIE**
SYSTEM UND VERFAHREN ZUR UNTERSTÜTZUNG DER SYNCHRONISATION EINES FREILAUFS UND ENTSPRECHENDES FAHRZEUG
SYSTEM AND METHOD FOR ASSISTING WITH THE SYNCHRONISATION OF A FREE WHEEL AND ASSOCIATED VEHICLE

(30) Priorité: 30.06.2020 FR 2006837
(43) Date de publication de la demande: 05.01.2022
(73) Titulaire: Airbus Helicopters, 13725 Marignane Cedex (FR)
(72) Inventeur: GOMEZ, Nayibe, 13090 AIX EN PROVENCE (FR)
(74) Mandataire: GPI Brevets

(56) Documents cités:
- EP-A1- 2 518 582
- FR-A1- 3 090 576
- US-A1- 2015 191 250

## Description

La présente invention concerne un système et un procédé d'aide à la synchronisation d'une roue libre, et un véhicule comprenant ce système.

Classiquement, un aéronef à voilure tournante comporte un rotor assurant au moins partiellement la sustentation de l'aéronef. Ce rotor peut aussi participer au moins partiellement à la propulsion de l'aéronef. Ainsi, un hélicoptère comporte un rotor principal assurant sa sustentation et sa propulsion.

Ce rotor est mû en rotation par une installation motrice comportant au moins un moteur et une boîte de transmission de puissance mise en mouvement par le ou les moteurs.

Par ailleurs, l'installation motrice peut comporter au moins une roue libre munie d'une partie menante, d'une partie menée, et d'au moins un organe de liaison. Par exemple, un organe de liaison prend au sein d'une roue libre à galets la forme d'un galet roulant sur une rampe.

A l'arrêt du système ou tant que la partie menée tourne plus vite que la partie menante, la roue libre est dans un état dénommé « désynchronisé » par commodité. La partie menante ne transmet pas un couple moteur à la partie menée.

A l'inverse, dans un état synchronisé, la partie menante et la partie menée tournent à la même vitesse et conjointement autour d'un axe de rotation.

Au sein d'une installation motrice d'un giravion, la partie menante d'une roue libre peut être reliée à un moteur alors que la partie menée de la roue libre peut être reliée à un rotor. La roue libre peut être agencée au sein du moteur, ou au sein d'une boîte de transmission de puissance voire au sein d'une chaîne cinématique reliant un moteur à la boîte de transmission de puissance. Par exemple, la boîte de transmission de puissance peut comprendre un système d'entrée mécanique de transmission de couple par moteur, chaque système d'entrée mécanique de transmission de couple incluant une roue libre.

Une telle roue libre peut remplir diverses fonctions.

Avant le démarrage d'un moteur particulier, la roue libre coopérant avec ce moteur particulier est dans son état désynchronisé. Le moteur n'étant pas démarré, le système de lubrification du moteur est aussi inactif. La roue libre permet de ne pas transférer un couple moteur du rotor vers ce moteur particulier. Par suite, si la partie menée de la roue libre est mise en rotation via le rotor, des organes mobiles non lubrifiés de ce moteur particulier ne risquent pas d'être mis en mouvement via la roue libre.

Après le démarrage de ce moteur particulier, la partie menée de la roue libre associée reliée à un rotor peut, dans des phases de vol particulières, tendre à tourner plus vite que sa partie menante reliée à l'arbre de sortie de ce moteur particulier. La roue libre peut par exemple être dans l'état désynchronisé lors d'une manœuvre en autorotation, lorsque ce moteur particulier est au ralenti ou arrêté alors que le rotor est mis en rotation via un autre moteur, ou lors d'une descente rapide... Dans cet état désynchronisé, la roue libre peut notamment empêcher le dépassement d'une limite de vitesse de rotation de l'arbre de sortie du moteur particulier ou le blocage du rotor.

Lorsque ce moteur particulier tombe en panne et que le rotor est toujours en rotation, la roue libre de ce moteur particulier passe dans l'état désynchronisé. La roue libre permet de désolidariser le rotor de ce moteur particulier en panne.

De manière générale, une roue libre est susceptible de se dégrader au cours de son utilisation.

Lorsque la roue libre est dans l'état désynchronisé mais que les parties menante et menée sont en rotation, certains composants de la roue libre peuvent s'user. Ainsi, certaines phases de vol et notamment les exercices d'autorotation ou de descentes rapides peuvent accélérer l'usure des roues libres au sein d'une installation motrice d'un giravion. Par exemple, au sein d'une roue libre à galets, les rampes peuvent s'user.

Les changements d'état successifs de la roue libre peuvent aussi tendre à l'user. Si la partie menante et la partie menée ont des vitesses de rotation très différentes, le passage de l'état désynchronisé à l'état synchronisé peut engendrer des chocs qui usent la roue libre.

Dès lors, les roues libres sont inspectées lors d'opérations de maintenance et remplacées si nécessaire.

Pour augmenter la fiabilité d'une roue libre, cette roue libre peut être surdimensionnée.

Le document FR 2929324 A1 est éloigné de cette problématique. Ce document concerne un turbomoteur pour un hélicoptère, comportant un générateur de gaz et une turbine libre. Le turbomoteur comprend en outre une machine électrique réversible apte à être couplée au générateur de gaz lors d'une phase de démarrage du turbomoteur, et à la turbine libre après la phase de démarrage du turbomoteur afin de générer de l'énergie électrique.

Le document FR 2997382 est aussi éloigné de cette problématique en décrivant un procédé de gestion d'une panne moteur sur un aéronef à voilure tournante comportant une installation motrice hybride munie d'au moins deux moteurs thermiques, d'au moins une machine électrique et d'une boîte de transmission principale de puissance. Selon ce procédé, on surveille pendant chaque vol le fonctionnement des moteurs thermiques afin de détecter une panne de l'un d'entre eux.

Les documents US 2015/191250, FR 3 090 576 et EP 2 518 582 sont aussi connus.

La présente invention a alors pour objet de proposer un procédé afin de tendre à optimiser la durée de vie et/ou la fiabilité d'une roue libre.

Ainsi, l'invention vise un procédé d'aide à la synchronisation d'une roue libre d'un système mécanique, ledit système mécanique étant muni d'une partie mobile à mettre en mouvement avec au moins un moteur principal, et par exemple une partie tournante, ladite roue libre comprenant une partie menante intégrée à une chaîne cinématique de transmission de puissance amont reliée au moteur principal, ladite roue libre comprenant une partie menée intégrée à une chaîne cinématique de transmission de puissance aval reliée au moins à la partie mobile.

Le procédé comporte les étapes suivantes :
- détermination que ledit moteur principal n'est pas en panne, à savoir que le moteur fonctionne d'une manière prédéterminée et/ou ne subit pas une défaillance,
- détermination que ledit moteur principal est démarré, ledit moteur principal étant démarré lorsqu'au moins un organe mobile du moteur principal est en mouvement,
- tant que ledit moteur principal est démarré et n'est pas en panne, mise en œuvre d'une phase de synchronisation assistée sollicitant un moteur auxiliaire, ladite phase de synchronisation assistée comprenant une étape de mise en mouvement de ladite chaîne cinématique de transmission de puissance amont avec le moteur principal et le moteur auxiliaire au moins tant qu'une vitesse de rotation amont de la partie menante est inférieure à une vitesse de rotation aval de ladite partie menée.

L'expression « au moins tant qu'une vitesse de rotation amont de la partie menante est inférieure à une vitesse de rotation aval de ladite partie menée » signifie que l'étape de mise en mouvement de ladite chaîne cinématique de transmission de puissance amont avec le moteur principal et le moteur auxiliaire si au moins un critère est rempli à savoir que la vitesse de rotation amont de la partie menante soit inférieure à une vitesse de rotation aval de ladite partie menée.

Au sein d'un système mécanique comprenant plusieurs moteurs principaux associés chacun à sa propre roue libre, le système mécanique peut comporter un moteur auxiliaire par roue libre. Alternativement, seul un moteur principal jugé critique peut être associé à un moteur auxiliaire.

Par ailleurs, le moteur principal est selon une possibilité un moteur fonctionnant avec du carburant, tel qu'un turbomoteur éventuellement, alors que le moteur auxiliaire est un moteur électrique ou une machine électrique par exemple.

Dès lors, un contrôleur détermine si le moteur principal est en panne ou à l'arrêt en appliquant des méthodes usuelles. Par exemple, un moteur principal peut être considéré comme étant démarré dès qu'un organe mobile de ce moteur principal est mis en mouvement par un démarreur. Selon un autre exemple, le moteur principal peut être considéré en panne si un organe mobile de ce moteur principal est mis en mouvement à une vitesse inférieure à un seuil alors que le moteur principal a été démarré, si une température et/ou une pression dans le moteur ne sont pas comprises dans des plages prédéterminées... Des capteurs usuels peuvent être sollicités pour détecter cet état de panne ou cet état de moteur principal à l'arrêt.

Lorsque le moteur principal est en panne ou à l'arrêt, le moteur auxiliaire est rendu inopérant par le contrôleur. Ainsi, la roue libre peut remplir pleinement son rôle en déconnectant cinématiquement le moteur principal de la partie mobile dans cette phase de fonctionnement.

A l'inverse, lorsque le moteur principal fonctionne normalement, le contrôleur pilote le moteur auxiliaire si la partie menée à une vitesse de rotation supérieure à la partie menante, et donc si la roue libre est dans son état désynchronisé.

Ainsi, ce procédé propose d'utiliser un moteur auxiliaire, dédié ou non à cette application, pour participer à la mise en mouvement de la chaîne cinématique de transmission de puissance amont dans des conditions particulières. Ce moteur auxiliaire a, dans le cadre du procédé d'aide à la synchronisation d'une roue libre, pour but de forcer la synchronisation de la roue libre en faisant tourner dans lesdites conditions particulières la partie menante de la roue libre à la même vitesse que la partie menée.

Si le contrôleur détecte que la partie menée présente une vitesse de rotation supérieure à la partie menante, par exemple durant une descente rapide au sein d'un giravion, le contrôleur sollicite le moteur auxiliaire pour y remédier.

Ce procédé tend à aller à l'encontre de préjugés en forçant une roue libre à être dans un état synchronisé et non pas désynchronisé dans des conditions particulières, notamment au sein d'une installation motrice d'un véhicule et en particulier d'un giravion, alors que cette roue libre a justement pour fonction d'atteindre cet état désynchronisé. Toutefois, ce maintien dans l'état synchronisé n'est pas gênant dans les conditions prévues puisque le premier moteur principal fonctionne normalement. Ce procédé peut alors tendre à limiter l'usure des composants de la roue libre en maintenant la roue libre dans l'état synchronisé, notamment lors des exercices d'autorotation ou de descentes rapides en vol voire aussi lors d'un entraînement à la panne moteur sur un giravion multimoteur réalisé en mettant au ralenti un moteur principal.

De plus, durant une phase d'entraînement à la panne moteur sur un giravion multimoteur, un premier moteur principal est par exemple mis au ralenti pour simuler une panne moteur et un deuxième moteur principal fonctionne normalement. Dès lors, la première roue libre reliée au premier moteur principal au ralenti est selon l'invention maintenue synchronisée à l'aide du moteur auxiliaire associé. Si le deuxième moteur principal en fonctionnement normal tombe subitement en panne, les risques de non engagement de la première roue libre lorsque le premier moteur est à nouveau sollicité à plein régime sont de fait limités.

Sur un système mécanique comprenant déjà un moteur auxiliaire pour assister un moteur principal dans des phases où une surpuissance est requise, ce moteur auxiliaire peut éventuellement être aussi sollicité dans le cadre du procédé de l'invention. Ainsi, le moteur auxiliaire peut être utilisé en appliquant ce procédé dans les phases où la roue libre associée est désynchronisée et en appliquant un autre procédé dans des phases où une surpuissance est requise par exemple.

Le procédé peut de plus comporter une ou plusieurs des caractéristiques qui suivent, prises seules ou en combinaison.

Selon une possibilité, la phase de synchronisation assistée peut comporter une étape de détermination que ladite vitesse de rotation aval est supérieure ou égale à un seuil de vitesse, ladite étape de mise en mouvement de ladite chaîne cinématique de transmission de puissance amont avec le moteur principal et le moteur auxiliaire étant interdite tant que ladite vitesse de rotation aval est supérieure ou égale au seuil de vitesse.

Par exemple, la chaîne cinématique de transmission amont peut être associée à une limite de vitesse de rotation à ne pas dépasser. Dès lors, lorsque le moteur principal n'est pas en panne et est démarré, le moteur auxiliaire peut être maintenu arrêté ou être arrêté si la vitesse de rotation aval est supérieure ou égale à un seuil de vitesse, indépendamment de la vitesse de rotation amont, pour garantir le respect de ladite limite de vitesse de rotation.

Selon une possibilité compatible avec la précédente, la phase de synchronisation assistée peut comporter l'étape suivante : mesure d'un couple moteur développé par le moteur principal, et détermination que ledit couple moteur est supérieur ou égal à un seuil de couple, ladite étape de mise en mouvement de ladite chaîne cinématique de transmission de puissance amont avec le moteur principal et le moteur auxiliaire étant interdite tant que ledit couple moteur est supérieur ou égal au seuil de couple.

Selon cette possibilité, indépendamment de la vitesse de rotation amont et de la vitesse de rotation aval, si le couple moteur développé par le moteur principal est supérieur ou égal à un seuil de couple prédéterminé, l'ordre de fonctionnement du moteur auxiliaire n'est pas ou plus donné.

Selon une possibilité compatible avec les précédentes, ladite détermination que ledit moteur principal n'est pas en panne et ladite détermination que ledit moteur principal est démarré peuvent être mises en oeuvre par un calculateur de surveillance d'un contrôleur, ledit procédé comportant une génération avec le calculateur de surveillance d'un signal d'autorisation de fonctionnement transmis à un calculateur d'assistance du contrôleur commandant ledit moteur auxiliaire lorsque ledit moteur principal n'est pas en panne et est démarré, ladite phase de synchronisation assistée débutant après réception du signal d'autorisation de fonctionnement par ledit calculateur d'assistance et étant mise en œuvre par ledit calculateur d'assistance.

Le contrôleur peut comporter un ou plusieurs calculateurs différents. Ainsi, le calculateur de surveillance et le calculateur d'assistance peuvent être deux calculateurs différents communiquant l'un avec l'autre ou peuvent comporter par exemple deux sous-ensembles d'un même calculateur et à titre illustratif deux segments de code distincts.

Selon cette possibilité, le calculateur de surveillance détermine si le moteur principal est démarré et en fonctionnement normal.

Dans l'affirmative, le calculateur de surveillance émet une autorisation d'utiliser le moteur auxiliaire. Par exemple, une telle autorisation peut prendre la forme d'un signal analogique ou numérique transmis au calculateur d'assistance ou la forme d'une valeur particulière d'une variable. Dès lors, le calculateur d'assistance met en œuvre la phase de synchronisation assistée en pilotant le moteur auxiliaire en fonction d'un différentiel entre la vitesse de rotation amont et la vitesse de rotation aval, voire du seuil de vitesse et/ou du couple moteur précités selon la variante.

Dans la négative, l'autorisation d'utiliser le moteur auxiliaire n'est pas ou plus donnée selon le cas. Le calculateur de gestion ne met alors pas en œuvre la phase de synchronisation assistée et ne surveille donc pas à cet effet le différentiel entre la vitesse de rotation amont et la vitesse de rotation aval.

Ce procédé vise à mette en œuvre la phase de synchronisation assistée que dans une phase particulière, le moteur auxiliaire pouvant être sollicité différemment en dehors de cette phase.

Selon une possibilité compatible avec les précédentes, ledit moteur auxiliaire est par exemple un moteur électrique réversible pouvant fonctionner en mode moteur et en mode générateur électrique, le procédé d'aide à la synchronisation d'une roue libre pouvant comporter une étape de génération d'une énergie électrique avec le moteur auxiliaire fonctionnant en mode générateur électrique tant qu'au moins un critère est rempli. Par exemple ledit au moins un critère comprend un critère de vitesse selon lequel ladite vitesse de rotation amont de ladite chaîne cinématique de transmission de puissance amont est égale à la vitesse de rotation aval de ladite chaîne cinématique de transmission de puissance aval sans assistance dudit moteur auxiliaire.

Selon cette possibilité, le moteur auxiliaire peut être un moteur électrique réversible pouvant produire une énergie électrique lorsque le moteur auxiliaire n'est pas sollicité pour assister le moteur principal, par exemple si la roue libre est synchronisée naturellement.

Eventuellement d'autres critères peuvent être pris en compte. Par exemple, le niveau de charge électrique d'une batterie électrique est transmis au contrôleur. Dès lors, le moteur auxiliaire est piloté par le contrôleur pour ne plus fonctionner en mode générateur électrique à partir d'un niveau de charge électrique prédéterminé.

Selon une possibilité compatible avec les précédentes, le moteur auxiliaire peut être dimensionné pour développer une puissance faible, seulement suffisante pour faire tourner la partie menante de la roue libre associée à la même vitesse que sa partie menée dans tout le domaine de fonctionnement prédéterminé du système mécanique. Ainsi, un opérateur peut calculer la vitesse de rotation maximale à atteindre et peut dimensionner le moteur auxiliaire strictement pour atteindre cette vitesse. Le moteur auxiliaire peut alors être relativement peu encombrant, léger et à faible coût financier.

Alternativement, durant ladite phase de synchronisation assistée, ledit moteur auxiliaire peut développer une puissance supérieure à une puissance suffisante pour que ladite vitesse de rotation amont de ladite chaîne cinématique de transmission de puissance amont soit égale à la vitesse de rotation aval de ladite chaîne cinématique de transmission de puissance aval pour tout un domaine de fonctionnement du système mécanique.

Dès lors, le moteur auxiliaire peut être dimensionné pour produire une puissance plus importante que la puissance nécessaire pour faire tourner la partie menante de la roue libre associée à la même vitesse que sa partie menée dans tout le domaine de fonctionnement prédéterminé du système mécanique.

Ainsi au sein d'un giravion par exemple, le moteur auxiliaire peut apporter un surcroît de puissance lors des descentes rapides, lors d'une phase d'arrondi d'une procédure d'atterrissage dénommée « flare » en langue anglaise ou encore lors d'un arrêt brusque du giravion. Le moteur auxiliaire peut fournir un surcroît de puissance lors de telles manœuvres avant que le moteur principal accélère.

Outre un procédé, l'invention est aussi relative à un système mécanique muni d'au moins une roue libre, ledit système mécanique étant muni d'une partie mobile à mettre en mouvement avec au moins un moteur principal, ladite roue libre comprenant une partie menante intégrée à une chaîne cinématique de transmission de puissance amont reliée au moteur principal, ladite au moins une roue libre comprenant une partie menée intégrée à une chaîne cinématique de transmission de puissance aval reliée au moins à la partie mobile.

Le système mécanique comporte un système d'aide à la synchronisation configuré pour mettre en œuvre le procédé de l'invention, le système d'aide à la synchronisation comportant :
- un senseur amont transmettant à un contrôleur un premier signal porteur de la vitesse de rotation amont,
- un senseur aval transmettant au contrôleur un deuxième signal porteur de la vitesse de rotation aval,
- un moteur auxiliaire accouplé à la chaîne cinématique de transmission de puissance amont, le contrôleur étant configuré pour appliquer le procédé de l'invention en déterminant que ledit moteur principal n'est pas en panne et est démarré, ledit contrôleur étant configuré pour piloter le moteur auxiliaire lors de ladite phase de synchronisation assistée en fonction au moins du premier signal et du deuxième signal.

Le moteur auxiliaire peut être accouplé à la chaîne cinématique de transmission de puissance amont par des moyens d'accouplement usuels, tels qu'un engrenage par exemple. Au moins un moyen d'accouplement peut être localisé dans le moteur principal, le cas échéant dans une boîte de transmission de puissance ou ailleurs.

Le système mécanique peut comporter une ou plusieurs des caractéristiques qui suivent, prises seules ou en combinaison.

Selon une possibilité, ledit contrôleur peut comporter un calculateur de surveillance, par exemple un calculateur moteur pilotant le moteur principal et le cas échéant son doseur de carburant, ledit calculateur de surveillance réalisant ladite détermination que ledit moteur principal n'est pas en panne et ladite détermination que ledit moteur principal est démarré.

Selon une possibilité compatible avec la précédente, ledit contrôleur peut comporter un calculateur d'assistance configuré pour piloter le moteur auxiliaire lors de ladite phase de synchronisation assistée.

Comme indiqué précédemment, le contrôleur peut comporter un ou plusieurs calculateurs différents. Ainsi, le calculateur de surveillance et le calculateur d'assistance peuvent être deux calculateurs différents communiquant le cas échéant l'un avec l'autre ou peuvent par exemple comporter respectivement deux sous-ensembles d'un même calculateur et à titre illustratif deux segments de code distincts.

Selon une possibilité compatible avec les précédentes, ledit système d'aide à la synchronisation peut comporter un couplemètre mesurant un couple moteur développé par le moteur principal.

Le terme couplemètre désigne un senseur apte à mesurer une valeur courante d'un couple moteur.

Selon une possibilité compatible avec les précédentes, ledit moteur auxiliaire peut être un moteur électrique.

Ce moteur électrique peut être connecté à un réseau électrique comprenant une ou plusieurs batteries électriques ou équivalents embarqués dans le système mécanique, et/ou un générateur électrique embarqué dans le système mécanique tel que par exemple un démarreur du moteur principal pouvant fonctionner selon un mode générateur d'électricité et un mode démarreur, et/ou une prise d'énergie électrique.

Selon une autre possibilité, ledit moteur électrique peut être une machine électrique réversible pouvant fonctionner en mode moteur et en mode générateur électrique.

Selon une possibilité compatible avec les précédentes, ledit moteur auxiliaire peut développer une puissance supérieure à une puissance suffisante pour que la vitesse de rotation amont soit égale à la vitesse de rotation aval dans tout un domaine de fonctionnement dudit système mécanique.

Outre un procédé et un système mécanique, l'invention vise aussi un véhicule comprenant ce système mécanique.

Par exemple, ledit véhicule est un giravion, ladite partie mobile étant un rotor d'une voilure tournante ou un rotor de contrôle d'un mouvement en lacet du véhicule ou une hélice.

L'invention et ses avantages apparaîtront avec plus de détails dans le cadre de la description qui suit avec des exemples donnés à titre illustratif en référence aux figures annexées qui représentent :
- la figure 1, un exemple d'un système mécanique selon l'invention comprenant plusieurs roues libres,
- ] la figure 2, un exemple d'un système mécanique selon l'invention comprenant une roue libre, et
- la figure 3, un logigramme illustrant le procédé de l'invention.

Les éléments présents dans plusieurs figures distinctes sont affectés d'une seule et même référence.

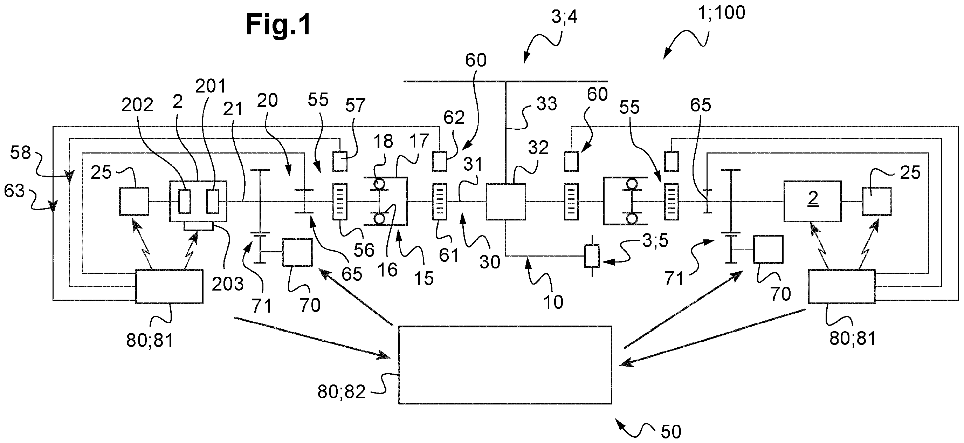

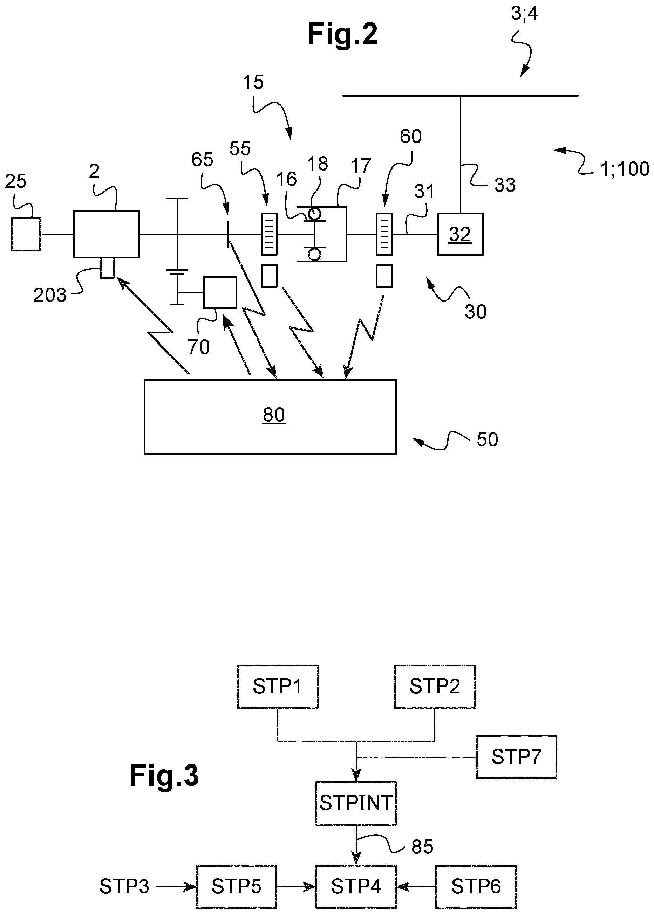

La figure 1 présente un exemple de système mécanique 1 selon l'invention. Quelle que soit la réalisation, le système mécanique 1 comporte une partie mobile 3 à mettre en mouvement et par exemple en rotation. Selon les exemples donnés sur les figures 1 et 2, le système mécanique 1 peut être un véhicule 100. En particulier, le véhicule 100 peut être un giravion, la partie mobile 3 pouvant être par exemple une partie tournante telle qu'un rotor 4 d'une voilure tournante ou un rotor 5 de contrôle d'un mouvement en lacet du véhicule 100 ou encore une hélice.

Quelle que soit la réalisation et pour mettre en mouvement la partie mobile 3, le système mécanique 1 comporte une installation motrice. Cette installation motrice possède au moins un moteur principal 2 relié par un dispositif mécanique de transmission de puissance 10 au moins à la partie mobile 3. Selon un exemple, au moins un moteur principal 2 comporte au moins un organe mobile. Selon l'exemple de la figure 1, au moins un moteur principal 2 peut être un turbomoteur comprenant un générateur de gaz 202 muni de pièces mobiles en rotation et au moins une turbine libre 201 solidaire en rotation d'un arbre de sortie 21. Selon un autre exemple, un moteur 2 peut être un moteur comprenant des pistons mobiles et un arbre de transmission de puissance. Au moins un moteur principal 2 peut aussi coopérer avec un appareil électrique 25 pouvant fonctionner au moins en mode démarreur voire aussi en mode générateur d'énergie électrique. Selon la figure 1, chaque appareil électrique 25 coopère avec un générateur de gaz 202 du moteur principal 2 associé. En outre, au moins un moteur principal 2 peut être piloté par un calculateur moteur 81, et par exemple un calculateur moteur 81 qui lui est propre. Un tel calculateur moteur 81 est parfois dénommé ECU, cet acronyme correspondant à l'expression anglaise « Engine Control Unit ». A cet effet, le moteur principal 2 peut comprendre un ou plusieurs capteurs de surveillance 203 permettant d'estimer l'état de fonctionnement du moteur 2. Sur un turbomoteur à turbine libre, il est courant de mesurer la vitesse de rotation du générateur de gaz, la vitesse de rotation de la turbine libre, la température de gaz à un ou plusieurs endroits du turbomoteur, des pressions de gaz... A l'aide de ces données, un calculateur moteur 81 ou un autre calculateur de surveillance peut déterminer si le moteur principal 2 est démarré et s'il est en panne.

Par ailleurs, le système mécanique de transmission de puissance 10 comporte au moins une roue libre 15 par moteur principal 2, la ou les roues libres 15 étant interposées mécaniquement entre un organe mobile du moteur principal 2 associé et la partie mobile 3.

La figure 1 illustre ainsi une installation motrice à deux moteurs principaux 2 et deux roues libres 15 alors que la figure 2 donne l'exemple d'une installation motrice ayant un moteur principal 2 et une roue libre 15.

Quel que soit le nombre de roue(s) libre(s) 15 et la réalisation du système mécanique 1, chaque roue libre 15 comprend une partie menante 16 et une partie menée 17. Des pièces de liaison 18 usuelles, tels que par exemple des galets qui roulent sur des rampes par exemple, lient en rotation la partie menante 16 et la partie menée 17 dans un mode synchronisé atteint lorsque la partie menante 16 et la partie menée 17 sont solidaires en rotation et tournent à la même vitesse de rotation. Par contre, lorsque la partie menée 17 tourne plus vite que la partie menante 16, lesdites pièces de liaison 18 désolidarisent en rotation la partie menante 16 et la partie menée 17.

Dès lors, le système mécanique de transmission de puissance 10 comporte une chaîne cinématique de transmission de puissance amont 20 qui inclut la partie menante 16 et s'étend jusqu'à un organe du moteur principal 2, voire même au sein du moteur principal 2. La chaîne cinématique de transmission de puissance amont 20 peut inclure diverses pièces mécaniques comme par exemple un arbre de sortie 21 du moteur principal 2, d'autres arbres, des organes de connexion entre deux arbres, au moins un engrenage, au moins un sous-ensemble d'une boîte de transmission...

De même, le système mécanique de transmission de puissance 10 comporte une chaîne cinématique de transmission de puissance aval 30 qui inclut la partie menée 17 et s'étend jusqu'à la partie mobile 3, et éventuellement jusqu'à d'autres éléments mobiles et par exemple tournants. La chaîne cinématique de transmission de puissance aval 30 peut inclure diverses pièces mécaniques comme par exemple un arbre 31, une boîte de transmission de puissance 32 ou au moins un sous-ensemble d'une boîte de transmission de puissance 32, un mât rotor 33, au moins un engrenage...

En effet, selon l'exemple illustré sur les figures 1 et 2, chaque roue libre 15 est disposée entre un moteur principal 2 et une boîte de transmission de puissance 32, mais au moins une roue libre 15 pourrait être localisée dans cette boîte de transmission de puissance 32, voire même dans un moteur principal 2.

Selon un autre aspect et quelle que soit la réalisation, le système mécanique 1 comprend un système d'aide à la synchronisation 50 qui est configuré pour mettre en œuvre le procédé selon l'invention décrit par la suite. En présence de plusieurs roues libres 15, le système d'aide à la synchronisation 50 peut aider à la synchronisation de plusieurs roues libres 15 comme le montre la figure 1 ou d'une unique roue libre 15 comme le montre la figure 2.

Ce système d'aide à la synchronisation 50 peut comprendre un senseur amont 55 par roue libre 15 à assister. Le senseur amont 55 est disposé sur un tronçon de la chaîne cinématique de transmission de puissance amont 20 pour mesurer une valeur de la vitesse de rotation amont de la partie menante 16 soit directement lorsqu'un tronçon de la chaîne cinématique de transmission de puissance amont 20 équipé du senseur amont 55 est mis en rotation à la même vitesse que la partie menante 16, soit indirectement dans le cas contraire. Par exemple, si la chaîne cinématique de transmission de puissance amont 20 comporte un réducteur de vitesse de rotation entre le tronçon équipé du senseur amont 55 et la partie menante 16, alors la vitesse de rotation amont est égale à la vitesse de rotation mesurée avec le senseur amont 55 multipliée par un coefficient de réduction de vitesse. Ainsi, le senseur amont 55 peut comporter un dispositif apte à émettre un premier signal 58 par exemple analogique ou numérique, électrique ou optique, image de la vitesse de rotation amont, à un coefficient de multiplication près éventuellement.

Selon une possibilité illustrée sur la figure 1, le senseur amont 55 comporte une roue codeuse amont 56 solidaire d'un secteur de la chaîne cinématique de transmission de puissance amont 20 et un capteur amont 57 usuel en vis-à-vis de la roue codeuse amont 56, ledit capteur amont 57 émettant le premier signal 58. Un calculateur, et par exemple le calculateur moteur 81 ou un autre calculateur de surveillance, peut décoder le premier signal 58 de manière usuelle pour en déduire la vitesse de rotation amont. Cet exemple est donné à titre illustratif uniquement, tout senseur de vitesse étant envisageable. Par exemple il est possible d'utiliser un capteur de position associé à dérivateur ou encore un accéléromètre associé à un intégrateur.

Ce système d'aide à la synchronisation 50 peut comprendre au moins un senseur aval 60 disposé sur un tronçon de la chaîne cinématique de transmission de puissance aval 30 de la roue libre 15 associée pour mesurer une valeur de la vitesse de rotation aval de la partie menée 17 d'une roue libre à assister soit directement lorsque le tronçon de la chaîne cinématique de transmission de puissance aval 30 équipé du senseur aval 60 est mis en rotation à la même vitesse que la partie menée 17, soit indirectement dans le cas contraire. Par exemple, si la chaîne cinématique de transmission de puissance aval 30 comporte un réducteur de vitesse de rotation entre le tronçon équipé du senseur aval 60 et la partie menée 17, alors la vitesse de rotation aval est égale à la vitesse de rotation mesurée avec le senseur aval 60 multipliée par un coefficient de réduction de vitesse. Ainsi, le senseur aval 60 peut comporter un dispositif apte à émettre un deuxième signal 63 par exemple analogique ou numérique, électrique ou optique, image de la vitesse de rotation aval, à un coefficient de multiplication près éventuellement.

Selon une possibilité illustrée sur la figure 1, le senseur aval 60 comporte une roue codeuse aval 61 solidaire d'un secteur de la chaîne cinématique de transmission de puissance aval 30 et un capteur aval 62 usuel en vis-à-vis de la roue codeuse aval 61, ledit capteur aval 62 émettant le deuxième signal 63. Un calculateur, et par exemple le calculateur moteur 81 ou un autre calculateur de surveillance, peut décoder le deuxième signal 63 de manière usuelle pour en déduire la vitesse de rotation aval. Cet exemple est donné à titre illustratif uniquement, tout senseur de vitesse étant envisageable. Par exemple il est possible d'utiliser un capteur de position associé à un dérivateur ou encore un accéléromètre associé à un intégrateur.

En présence de plusieurs roues libres 15 à assister conformément à l'exemple de la figure 1, le système d'aide à la synchronisation 50 peut comprendre un senseur aval 60 par roue libre 15 à assister, ou un même senseur aval 60 peut être utilisé pour surveiller plusieurs roues libres 15 à assister en étant agencé sur un organe mis en mouvement conjointement par lesdites plusieurs roues libres 15. Selon l'exemple de la figure 1, un unique senseur aval 60 pourrait être agencé sur le mât rotor 33.

Indépendamment de ces aspects, le système d'aide à la synchronisation 50 peut selon une option comporter un couplemètre 65 par roue libre 15 à assister. Chaque couplemètre 65 mesure une valeur courante d'un couple moteur développé par un moteur principal 2 relié à une roue libre 15 à assister en émettant un signal de couple, analogique ou numérique, porteur de ce couple moteur.

Indépendamment de ces aspects, le système d'aide à la synchronisation 50 est muni d'un moteur auxiliaire 70 par roue libre 15 à assister. Ce moteur auxiliaire 70 est accouplé à la chaîne cinématique de transmission de puissance amont 20 reliée à la roue libre 15 associée par un système d'accouplement mécanique 71 usuel. Un tel système d'accouplement mécanique 71 peut comprendre au moins un arbre, au moins un engrenage par exemple ayant un pignon ou une roue solidaire en rotation d'un tronçon de la chaîne cinématique de transmission de puissance amont 20, un embrayage...

Par ailleurs, le moteur auxiliaire 70 peut comprendre un moteur électrique. Le moteur auxiliaire 70 est alors relié à un réseau électrique du véhicule 100 muni d'au moins un appareil électrique 25 et/ou au moins une batterie électrique ou un équivalent, et/ou une prise électrique... Par exemple, le moteur auxiliaire 70 peut aussi être une machine électrique réversible pouvant fonctionner en mode moteur et en mode générateur électrique en fonction de l'ordre reçu.

En outre, le moteur auxiliaire 70 peut développer une puissance maximale supérieure ou strictement égale à une puissance suffisante pour que la vitesse de rotation amont de la chaîne cinématique de transmission de puissance amont 20 reliée à ce moteur auxiliaire 70 soit égale à la vitesse de rotation aval dans tout un domaine de fonctionnement du système mécanique 1.

Indépendamment de ces aspects, le système d'aide à la synchronisation 50 est muni d'un contrôleur 80 relié par une liaison filaire ou non filaire au ou aux senseurs amont 55 pour recevoir le ou les premiers signaux 58 et au ou aux senseurs aval 60 pour recevoir le ou les deuxièmes signaux 63, voire au ou aux couplemètres 65. De plus, le contrôleur 80 est configuré pour appliquer le procédé selon l'invention en pilotant au moins un moteur auxiliaire 70 pour mettre la roue libre 15 associée dans son mode de fonctionnement synchronisé dans des conditions particulières.

Le contrôleur 80 peut comprendre un ou plusieurs organes exécutant des instructions mémorisées pour appliquer le procédé implémenté. Le contrôleur 80 peut comprendre un unique calculateur ou plusieurs calculateurs. Le ou les calculateurs du contrôleur 80 peuvent comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Selon l'exemple de la figure 1, le contrôleur 80 comporte un calculateur de surveillance relié à au moins un senseur amont 55 et un senseur aval 60 voire à un couplemètre 65 pour chaque roue libre 15 à assister, ce premier calculateur pouvant être le calculateur moteur 81 d'un moteur principal 2. De plus, le contrôleur 80 peut comporter un calculateur d'assistance 82, distinct du ou des calculateurs moteur 81, en communication avec le ou les calculateurs moteur 81 et les ou les moteurs auxiliaires 70.

Selon l'exemple de la figure 2, le contrôleur 80 peut comporter un unique calculateur communiquant avec chaque senseur 55, 60 et le moteur principal 2 ainsi que le moteur auxiliaire 70. Eventuellement, deux parties de cet unique calculateur peuvent remplir les rôles respectivement du calculateur de surveillance 81 et du calculateur d'assistance 82 précédents dans le cadre du procédé de l'invention. Par exemple, un calculateur moteur 81 ou un autre calculateur peut remplir à la fois le rôle du calculateur de surveillance et du calculateur d'assistance.

Ainsi les figures 1 et 2 illustrent diverses réalisations.

En particulier, la figure 1 montre un système mécanique 1 ayant deux roues libres 15 à assister avec respectivement deux moteurs auxiliaires 70, le contrôleur 80 comprenant deux calculateurs de surveillance comprenant respectivement les deux calculateurs moteurs 81 coopérant avec les deux moteurs principaux 2 reliés respectivement aux deux roues libres 15 à assister, le contrôleur 80 ayant un calculateur d'assistance 82 communiquant par des liaisons filaires ou non filaires avec les deux calculateurs moteur 81.

La figure 2 illustre une autre variante, munie d'une unique roue libre 15 à assister et d'un contrôleur 80 comprenant un unique calculateur en communication avec le moteur principal 2, un appareil électrique 25, un moteur auxiliaire 70, les senseurs amont 55 et aval 60 voire le couplemètre 65.

Indépendamment du nombre de roue(s) libre(s) et de la réalisation, la figure 3 illustre le procédé selon l'invention pour assister une roue libre 15 reliée à un moteur principal 2.

Ce procédé comporte une étape de détermination STP1 avec le contrôleur 80 que le moteur principal 2 n'est pas en panne et une étape de détermination STP2 avec le contrôleur 80 que ledit moteur principal 2 est démarré. Par exemple, le contrôleur 80 utilise des méthodes usuelles et des capteurs usuels 203 pour déterminer que le moteur principal 2 est démarré et fonctionne correctement.

Tant que le moteur principal 2 est démarré et n'est pas en panne, le contrôleur 80 est configuré pour piloter le moteur auxiliaire 70 associé dans des conditions prédéterminées durant une phase de synchronisation assistée STP3.

Lorsque le contrôleur 80 comporte un calculateur de surveillance 81, alors ce calculateur de surveillance 81 réalise ladite détermination que ledit moteur principal 2 n'est pas en panne et ladite détermination que le moteur principal 2 est démarré. Le calculateur de surveillance 81 transmet alors un signal au calculateur d'assistance 82 porteur de l'état du moteur principal 2. Durant une étape optionnelle d'autorisation de fonctionnement STPINT, la calculateur de surveillance 81 peut transmettre au calculateur d'assistance 82 un signal 85 d'autorisation de fonctionnement, numérique ou analogique, porteur d'une autorisation de mettre en œuvre la phase de synchronisation assistée STP3 lorsque le moteur principal 2 n'est pas en panne et est démarré. Tant que le signal d'autorisation est reçu par le calculateur d'assistance 82, ce calculateur d'assistance 82 met en œuvre la phase de synchronisation assistée STP3.

Indépendamment de cet aspect, durant la phase de synchronisation assistée STP3 et donc tant que le moteur principal 2 n'est pas en panne et est démarré, le contrôleur 80 pilote le moteur auxiliaire 70 lors d'une étape d'assistance STP4, en transmettant un signal de commande analogique ou numérique par exemple ou en alimentant électriquement le moteur auxiliaire 70, pour que le moteur auxiliaire 70 fonctionne en mode moteur afin de mettre en mouvement la chaîne cinématique de transmission de puissance amont 20 avec le moteur principal 2 au moins tant qu'une première condition est remplie. Cette première condition est par exemple que la vitesse de rotation amont soit inférieure à la vitesse de rotation aval ou est inférieure à la vitesse de rotation aval moins une marge prédéterminée.

Selon une variante, seule cette première condition est vérifiée par le contrôleur 80.

Selon une variante, la phase de synchronisation assistée STP3 comporte une étape de détermination STP6 avec le contrôleur 80 que la vitesse de rotation aval est supérieure ou égale à un seuil de vitesse mémorisé dans le contrôleur 80. Dans l'affirmative, le contrôleur 80 maintient à l'arrêt le moteur auxiliaire 70 tant que la vitesse de rotation aval est supérieure ou égale au seuil de vitesse, quelle que soit la différence de vitesse entre la vitesse de rotation amont et la vitesse de rotation aval. Par exemple, le contrôleur 80 génère un signal de commande transmis au moteur auxiliaire 70 pour l'arrêter le cas échéant.

Selon une variante compatible avec la précédente, la phase de synchronisation assistée STP3 comporte une étape de mesure STP5 durant laquelle un couplemètre 65 optionnel mesure le couple moteur développé par le moteur principal 2. Le contrôleur 80 maintient à l'arrêt le moteur auxiliaire 70 tant que ce couple moteur est supérieur ou égal à un seuil de couple mémorisé dans le contrôleur 80, quelle que soit la différence de vitesse entre la vitesse de rotation amont et la vitesse de rotation aval. Par exemple, le contrôleur génère un signal de commande transmis au moteur auxiliaire 70 pour l'arrêter le cas échéant.

Selon une option, le procédé peut en outre comporter une étape STP7 de génération d'une énergie électrique avec le moteur auxiliaire 70 fonctionnant en mode générateur électrique tant qu'au moins un critère est rempli. Par exemple, lorsque la vitesse de rotation amont est égale à la vitesse de rotation aval sans assistance dudit moteur auxiliaire 70, le contrôleur 80 peut piloter le moteur auxiliaire 70 pour le faire fonctionner si possible dans un mode générateur d'énergie électrique.

Naturellement, bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définie dans les revendications.

Par exemple, le contrôleur 80 de la figure 2 pourrait comprendre un calculateur moteur 81 du moteur principal 2.

Par ailleurs, les figures 1 et 2 illustrent un giravion. Le système mécanique 1 peut prendre cependant d'autres formes sans sortir du cadre de l'invention. Par exemple, le système mécanique 1 peut prendre la forme d'un autre véhicule ou d'un système industriel ou autres dans lesquels une roue libre 15 peut être maintenue dans son état synchronisé lorsque le moteur principal 2 associé n'est pas en panne et démarré.

## Revendications

1. Procédé d'aide à la synchronisation d'une roue libre (15) d'un système mécanique (1), ledit système mécanique (1) étant muni d'une partie mobile (3) à mettre en mouvement avec au moins un moteur principal (2), ladite roue libre (15) comprenant une partie menante (16) intégrée à une chaîne cinématique de transmission de puissance amont (20) reliée au moteur principal (2), ladite roue libre (15) comprenant une partie menée (17) intégrée à une chaîne cinématique de transmission de puissance aval (30) reliée au moins à la partie mobile (3),
**caractérisé en ce que** le procédé comporte les étapes suivantes :
- détermination (STP1) que ledit moteur principal (2) n'est pas en panne,
- détermination (STP2) que ledit moteur principal (2) est démarré, ledit moteur principal (2) étant démarré lorsqu'au moins un organe mobile (201, 202) du moteur principal est en mouvement,
- tant que ledit moteur principal (2) est démarré et n'est pas en panne, mise en œuvre d'une phase de synchronisation assistée (STP3) sollicitant un moteur auxiliaire (70), ladite phase de synchronisation assistée (STP3) comprenant une étape (STP4) de mise en mouvement de ladite chaîne cinématique de transmission de puissance amont (20) avec le moteur principal (2) et le moteur auxiliaire (70) au moins tant qu'une vitesse de rotation amont de ladite partie menante (16) est inférieure à une vitesse de rotation aval de ladite partie menée (17).

2. Procédé selon la revendication 1,
**caractérisé en ce que** ladite phase de synchronisation assistée (STP3) comporte une étape (STP6) de détermination que ladite vitesse de rotation aval est supérieure ou égale à un seuil de vitesse, ladite étape (STP4) de mise en mouvement de ladite chaîne cinématique de transmission de puissance amont (20) avec le moteur principal (2) et le moteur auxiliaire (70) étant interdite tant que ladite vitesse de rotation aval est supérieure ou égale au seuil de vitesse.

3. Procédé selon l'une quelconque des revendications 1 à 2, **caractérisé en ce que** ladite phase de synchronisation assistée (STP3) comporte l'étape suivante : mesure (STP5) d'un couple moteur développé par le moteur principal (2), et détermination que ledit couple moteur est supérieur ou égal à un seuil de couple, ladite étape (STP4) de mise en mouvement de ladite chaîne cinématique de transmission de puissance amont (20) avec le moteur principal (2) et le moteur auxiliaire (70) étant interdite tant que ledit couple moteur est supérieur ou égal au seuil de couple.

4. Procédé selon l'une quelconque des revendications 1 à 3, **caractérisé en ce que** ladite détermination que ledit moteur principal (2) n'est pas en panne et ladite détermination que ledit moteur principal (2) est démarré sont mises en œuvre par un calculateur de surveillance (81) d'un contrôleur (80), ledit procédé comportant une génération avec le calculateur de surveillance (81) d'un signal (85) d'autorisation de fonctionnement transmis à un calculateur d'assistance (82) du contrôleur (80) commandant ledit moteur auxiliaire (70) lorsque ledit moteur principal (2) n'est pas en panne et est démarré, ladite phase de synchronisation assistée (STP3) débutant après réception du signal d'autorisation de fonctionnement par ledit calculateur d'assistance (82) et étant mise en œuvre par ledit calculateur d'assistance (82).

5. Procédé selon l'une quelconque des revendications 1 à 4, **caractérisé en ce que** ledit moteur auxiliaire (70) est un moteur électrique réversible pouvant fonctionner en mode moteur et en mode générateur électrique, le procédé comportant une étape (STP7) de génération d'une énergie électrique avec le moteur auxiliaire (70) fonctionnant en mode générateur électrique tant qu'au moins un critère est rempli, ledit au moins un critère comprenant un critère de vitesse selon lequel ladite vitesse de rotation amont est égale à ladite vitesse de rotation aval sans assistance dudit moteur auxiliaire (70).

6. Procédé selon l'une quelconque des revendications 1 à 5, **caractérisé en ce que** durant ladite phase de synchronisation assistée ledit moteur auxiliaire (70) développe une puissance supérieure à une puissance suffisante pour que ladite vitesse de rotation amont soit égale à ladite vitesse de rotation aval pour tout un domaine de fonctionnement du système mécanique.

7. Système mécanique (1) muni d'au moins une roue libre (15), ledit système mécanique (1) étant muni d'une partie mobile (3) à mettre en mouvement avec au moins un moteur principal (2), ladite au moins une roue libre (15) comprenant une partie menante (16) intégrée à une chaîne cinématique de transmission de puissance amont (20) reliée au moteur principal (2), ladite au moins une roue libre (15) comprenant une partie menée (17) intégrée à une chaîne cinématique de transmission de puissance aval (30) reliée au moins à la partie mobile (3),
**caractérisé en ce que** ledit système mécanique (1) comporte un système d'aide à la synchronisation (50) configuré pour mettre en œuvre le procédé selon l'une quelconque des revendications 1 à 6, le système d'aide à la synchronisation (50) comportant :
- un senseur amont (55) transmettant à un contrôleur (80) un premier signal (58) porteur de ladite vitesse de rotation amont,
- un senseur aval (60) transmettant au contrôleur un deuxième signal (63) porteur de ladite vitesse de rotation aval,
- un moteur auxiliaire (70) accouplé à la chaîne cinématique de transmission de puissance amont (20), le contrôleur (80) étant configuré pour appliquer le procédé selon l'une quelconque des revendications 1 à 6 en déterminant que ledit moteur principal (2) n'est pas en panne et est démarré, ledit contrôleur (80) étant configuré pour piloter le moteur auxiliaire (70) lors de ladite phase de synchronisation assistée (STP3) en fonction au moins du premier signal (58) et du deuxième signal (63).

8. Système mécanique selon la revendication 7,
**caractérisé en ce que** ledit contrôleur (80) comporte un calculateur de surveillance (81), ledit calculateur de surveillance (81) réalisant ladite détermination (STP1) que ledit moteur principal (2) n'est pas en panne et ladite détermination (STP2) que ledit moteur principal (2) est démarré.

9. Système mécanique selon l'une quelconque des revendications 7 à 8,
**caractérisé en ce que** ledit contrôleur (80) comporte un calculateur d'assistance (82) configuré pour piloter le moteur auxiliaire (70) lors de ladite phase de synchronisation assistée (STP3).

10. Système mécanique selon l'une quelconque des revendications 7 à 9,
**caractérisé en ce que** ledit système d'aide à la synchronisation (50) comporte un couplemètre (65) mesurant un couple moteur développé par le moteur principal (2).

11. Système mécanique selon l'une quelconque des revendications 7 à 10,
**caractérisé en ce que** ledit moteur auxiliaire (70) est un moteur électrique.

12. Système mécanique selon l'une quelconque des revendications 7 à 10,
**caractérisé en ce que** ledit moteur auxiliaire (70) est une machine électrique réversible pouvant fonctionner en mode moteur et en mode générateur électrique.

13. Système mécanique selon l'une quelconque des revendications 7 à 12,
**caractérisé en ce que** ledit moteur auxiliaire (70) développe une puissance supérieure à une puissance suffisante pour que ladite vitesse de rotation amont soit égale à ladite vitesse de rotation aval dans tout un domaine de fonctionnement dudit système mécanique (1).

14. Véhicule (100),
**caractérisé en ce que** ledit véhicule (100) comporte un système mécanique (1) selon l'une quelconque des revendications 7 à 13.

15. Véhicule (100) selon la revendication 14,
**caractérisé en ce que** ledit véhicule (100) est un giravion, ladite partie mobile (3) étant un rotor (4) d'une voilure tournante ou un rotor (5) de contrôle d'un mouvement en lacet du véhicule (100) ou une hélice.

## Patentansprüche

1. Verfahren zur Unterstützung der Synchronisation eines Freilaufs (15) eines mechanischen Systems (1), wobei das mechanische System (1) mit einem beweglichen Teil (3) versehen ist, der mit mindestens einem Hauptmotor (2) in Bewegung zu setzen ist, wobei der Freilauf (15) einen antreibenden Teil (16) umfasst, der in einen stromaufwärtigen Kraftübertragungsantriebsstrang (20) integriert ist, der mit dem Hauptmotor (2) verbunden ist, wobei der Freilauf (15) einen angetriebenen Teil (17) umfasst, der in einen stromabwärtigen Kraftübertragungsantriebsstrang (30) integriert ist, der zumindest mit dem beweglichen Teil (3) verbunden ist,
**dadurch gekennzeichnet, dass** das Verfahren die folgenden Schritte umfasst:
- Bestimmen (STP1), dass der Hauptmotor (2) nicht gestört ist,
- Bestimmen (STP2), dass der Hauptmotor (2) gestartet ist, wobei der Hauptmotor (2) gestartet ist, wenn mindestens ein bewegliches Teil (201, 202) des Hauptmotors in Bewegung ist,
- solange der Hauptmotor (2) gestartet ist und nicht gestört ist, Ausführen einer Synchronisationsunterstützungsphase (STP3), die einen Hilfsmotor (70) belastet, wobei die Synchronisationsunterstützungsphase (STP3) einen Schritt (STP4) des Inbewegungsetzens des stromaufwärtigen Kraftübertragungsantriebsstrangs (20) mit dem Hauptmotor (2) und dem Hilfsmotor (70) zumindest solange umfasst, wie eine stromaufwärtige Drehgeschwindigkeit des antreibenden Teils (16) niedriger ist als eine stromabwärtige Drehgeschwindigkeit des angetriebenen Teils (17).

2. Verfahren nach Anspruch 1,
**dadurch gekennzeichnet, dass** die Synchronisationsunterstützungsphase (STP3) einen Schritt (STP6) des Bestimmens umfasst, dass die stromabwärtige Rotationsgeschwindigkeit größer oder gleich einem Geschwindigkeitsschwellenwert ist, wobei der Schritt (STP4) des Inbewegungsetzens des stromaufwärtigen Kraftübertragungsantriebsstrangs (20) mit dem Hauptmotor (2) und dem Hilfsmotor (70) gesperrt wird, solange die stromabwärtige Rotationsgeschwindigkeit größer oder gleich dem Geschwindigkeitsschwellenwert ist.

3. Verfahren nach einem der Ansprüche 1 bis 2,
**dadurch gekennzeichnet, dass** die Synchronisationsunterstützungsphase (STP3) den folgenden Schritt umfasst: Messen (STP5) eines vom Hauptmotor (2) erzeugten Motordrehmoments und Bestimmen, dass das Motordrehmoment größer oder gleich einem Drehmomentschwellenwert ist, wobei der Schritt (STP4) des Inbewegungsetzens des stromaufwärtigen Kraftübertragungsantriebsstrangs (20) mit dem Hauptmotor (2) und dem Hilfsmotor (70) gesperrt ist, solange das Motordrehmoment größer oder gleich dem Drehmomentschwellenwert ist.

4. Verfahren nach einem der Ansprüche 1 bis 3,
**dadurch gekennzeichnet, dass** die Bestimmung, dass der Hauptmotor (2) nicht gestört ist, und die Bestimmung, dass der Hauptmotor (2) gestartet ist, von einem Überwachungsrechner (81) einer Steuerung (80) implementiert werden, wobei das Verfahren die Erzeugung eines Betriebsfreigabesignals (85) mit dem Überwachungsrechner (81) umfasst, das an einen Unterstützungsrechner (82) der Steuerung (80) übertragen wird, der den Hilfsmotor (70) steuert, wenn der Hauptmotor (2) nicht gestört ist und gestartet ist, wobei die Synchronisationsunterstützungsphase (STP3) nach dem Empfang des Betriebsfreigabesignals durch den Unterstützungsrechner (82) beginnt und durch den Unterstützungsrechner (82) implementiert wird.

5. Verfahren nach einem der Ansprüche 1 bis 4,
**dadurch gekennzeichnet, dass** der Hilfsmotor (70) ein umkehrbarer Elektromotor ist, der im Motorbetrieb und im elektrischen Generatorbetrieb arbeiten kann, wobei das Verfahren einen Schritt (STP7) des Erzeugens von elektrischer Energie mit dem im elektrischen Generatorbetrieb arbeitenden Hilfsmotor (70) umfasst, solange mindestens ein Kriterium erfüllt ist, wobei das mindestens eine Kriterium ein Geschwindigkeitskriterium umfasst, nach dem die stromaufwärtige Drehgeschwindigkeit gleich der stromabwärtigen Drehgeschwindigkeit ohne Unterstützung des Hilfsmotors (70) ist.

6. Verfahren nach einem der Ansprüche 1 bis 5,
**dadurch gekennzeichnet, dass** während der Synchronisationsunterstützungsphase der Hilfsmotor (70) eine Leistung entwickelt, die größer ist als eine Leistung, die ausreicht, damit die stromaufwärtige Drehgeschwindigkeit gleich der stromabwärtigen Drehgeschwindigkeit für einen gesamten Betriebsbereich des mechanischen Systems ist.

7. Mechanisches System (1) mit mindestens einem Freilauf (15), wobei das mechanische System (1) mit einem beweglichen Teil (3) versehen ist, der mit mindestens einem Hauptmotor (2) in Bewegung zu setzen ist, wobei der mindestens eine Freilauf (15) einen antreibenden Teil (16) umfasst, der in einen stromaufwärtigen Kraftübertragungsantriebsstrang (20) integriert ist, der mit dem Hauptmotor (2) verbunden ist, wobei der mindestens eine Freilauf (15) einen angetriebenen Teil (17) umfasst, der in einen stromabwärtigen Kraftübertragungsantriebsstrang (30) integriert ist, der zumindest mit dem beweglichen Teil (3) verbunden ist,
**dadurch gekennzeichnet, dass** das mechanische System (1) ein Synchronisationsunterstützungssystem (50) umfasst, das konfiguriert ist, um das Verfahren nach einem der Ansprüche 1 bis 6 auszuführen, wobei das Synchronisationsunterstützungssystem (50) umfasst:
- einen stromaufwärtigen Sensor (55), der ein erstes Signal (58), das die stromaufwärtige Drehgeschwindigkeit trägt, an eine Steuerung (80) überträgt,
- einen stromabwärtigen Sensor (60), der ein zweites Signal (63), das die stromabwärtige Drehgeschwindigkeit trägt, an die Steuerung überträgt,
- einen Hilfsmotor (70), der mit dem stromaufwärtigen Kraftübertragungsantriebsstrang (20) gekoppelt ist, wobei die Steuerung (80) konfiguriert ist, um das Verfahren nach einem der Ansprüche 1 bis 6 anzuwenden, wenn sie feststellt, dass der Hauptmotor (2) nicht gestört ist und gestartet ist, wobei die Steuerung (80) konfiguriert ist, um den Hilfsmotor (70) während der Synchronisationsunterstützungsphase (STP3) in Abhängigkeit von mindestens dem ersten Signal (58) und dem zweiten Signal (63) anzusteuern.

8. Mechanisches System nach Anspruch 7,
**dadurch gekennzeichnet, dass** die Steuerung (80) einen Überwachungsrechner (81) umfasst, wobei der Überwachungsrechner (81) die Bestimmung (STP1), dass der Hauptmotor (2) nicht gestört ist, und die Bestimmung (STP2), dass der Hauptmotor (2) gestartet ist, durchführt.

9. Mechanisches System nach einem der Ansprüche 7 bis 8,
**dadurch gekennzeichnet, dass** die Steuerung (80) einen Unterstützungsrechner (82) umfasst, der konfiguriert ist, um den Hilfsmotor (70) während der Synchronisationsunterstützungsphase (STP3) zu steuern.

10. Mechanisches System nach einem der Ansprüche 7 bis 9,
**dadurch gekennzeichnet, dass** das Synchronisationsunterstützungssystem (50) einen Drehmomentmesser (65) umfasst, der ein vom Hauptmotor (2) entwickeltes Motordrehmoment misst.

11. Mechanisches System nach einem der Ansprüche 7 bis 10,
**dadurch gekennzeichnet, dass** der Hilfsmotor (70) ein Elektromotor ist.

12. Mechanisches System nach einem der Ansprüche 7 bis 10,
**dadurch gekennzeichnet, dass** der Hilfsmotor (70) eine umkehrbare elektrische Maschine ist, die sowohl im Motor- als auch im elektrischen Generatorbetrieb arbeiten kann.

13. Mechanisches System nach einem der Ansprüche 7 bis 12,
**dadurch gekennzeichnet, dass** der Hilfsmotor (70) eine Leistung erzeugt, die größer ist als eine Leistung, die ausreicht, damit die stromaufwärtige Drehgeschwindigkeit in einem gesamten Betriebsbereich des mechanischen Systems (1) gleich der stromabwärtigen Drehgeschwindigkeit ist.

14. Verkehrsmittel (100),
**dadurch gekennzeichnet, dass** das Verkehrsmittel (100) ein mechanisches System (1) nach einem der Ansprüche 7 bis 13 aufweist.

15. Verkehrsmittel (100) nach Anspruch 14,
**dadurch gekennzeichnet, dass** das Verkehrsmittel (100) ein Drehflügelflugzeug ist, wobei der bewegliche Teil (3) ein Rotor (4) eines Drehflügels oder ein Rotor (5) zur Steuerung einer Gierbewegung des Verkehrsmittels (100) oder ein Propeller ist.

## Claims

1. Method for assisting with the synchronization of a free wheel (15) of a mechanical system (1), said mechanical system (1) being provided with a moving part (3) to be set in motion with at least one main engine (2), said free wheel (15) comprising a driving part (16) integrated with an upstream power transmission kinematic chain (20) connected to the main engine (2), said free wheel (15) comprising a driven part (17) integrated with a downstream power transmission kinematic chain (30) connected at least to the moving part (3),
**characterized in that** the method comprises the following steps:
- determining (STP1) that said main engine (2) has not malfunctioned,
- determining (STP2) that said main engine (2) has started, said main engine (2) having started when at least one moving part (201, 202) of the main engine is in motion,
- as long as said main engine (2) has started and has not malfunctioned, implementing an assisted synchronization phase (STP3) placing demands on an auxiliary motor (70), said assisted synchronization phase (STP3) comprising a step (STP4) of setting in motion said upstream power transmission kinematic chain (20) with the main engine (2) and the auxiliary motor (70), at least as long as an upstream rotation speed of said driving part (16) is lower than a downstream rotation speed of said driven part (17).

2. Method according to Claim 1,
**characterized in that** said assisted synchronization phase (STP3) comprises a step (STP6) of determining that said downstream rotation speed is greater than, or equal to, a speed threshold, said step (STP4) of setting in motion said upstream power transmission kinematic chain (20) with the main engine (2) and the auxiliary motor (70) being prohibited as long as said downstream rotation speed is greater than, or equal to, the speed threshold.

3. Method according to any one of Claims 1 to 2,
**characterized in that** said assisted synchronization phase (STP3) comprises the following step: measuring (STP5) an engine torque developed by the main engine (2) and determining that said engine torque is greater than, or equal to, a torque threshold, said step (STP4) of setting in motion said upstream power transmission kinematic chain (20) with the main engine (2) and the auxiliary motor (70) being prohibited as long as said engine torque is greater than, or equal to, the torque threshold.

4. Method according to any one of Claims 1 to 3,
**characterized in that** said determining that said main engine (2) has not malfunctioned and said determining that said main engine (2) has started are implemented by a monitoring computer (81) of a controller (80), said method comprising using the monitoring computer (81) to generate an operation authorization signal (85) transmitted to an assistance computer (82) of the controller (80) governing said auxiliary motor (70) when said main engine (2) has not malfunctioned and has started, said assisted synchronization phase (STP3) starting after the operation authorization signal has been received by said assistance computer (82) and being implemented by said assistance computer (82).

5. Method according to any one of Claims 1 to 4,
**characterized in that** said auxiliary motor (70) is a reversible electric motor capable of operating in motor mode and in electric generator mode, the method comprising a step (STP7) of generating electrical energy with the auxiliary motor (70) operating in electric generator mode, as long as at least one criterion is met, said at least one criterion comprising a speed criterion, in which said upstream rotation speed is equal to said downstream rotation speed without assistance from said auxiliary motor (70).

6. Method according to any one of Claims 1 to 5,
**characterized in that** during said assisted synchronization phase, said auxiliary motor (70) develops a power greater than a power which is sufficient for said upstream rotation speed to be equal to said downstream rotation speed for an entire operating range of the mechanical system.

7. Mechanical system (1) provided with at least one free wheel (15), said mechanical system (1) being provided with a moving part (3) to be set in motion with at least one main engine (2), said at least one free wheel (15) comprising a driving part (16) integrated with an upstream power transmission kinematic chain (20) connected to the main engine (2), said at least one free wheel (15) comprising a driven part (17) integrated with a downstream power transmission kinematic chain (30) connected at least to the moving part (3),
**characterized in that** said mechanical system (1) comprises a synchronization assistance system (50) configured to implement the method according to any one of Claims 1 to 6, said synchronization assistance system (50) comprising:
- an upstream sensor (55) transmitting a first signal (58) carrying said upstream rotation speed to a controller (80),
- a downstream sensor (60) transmitting a second signal (63) carrying said downstream rotation speed to the controller,
- an auxiliary motor (70) coupled to the upstream power transmission kinematic chain (20), the controller (80) being configured to apply the method according to any one of Claims 1 to 6 by determining that said main engine (2) has not malfunctioned and has started, said controller (80) being configured to drive the auxiliary motor (70) during said assisted synchronization phase (STP3) based at least on the first signal (58) and the second signal (63).

8. Mechanical system according to Claim 7,
**characterized in that** said controller (80) comprises a monitoring computer (81), said monitoring computer (81) performing said determination (STP1) that said main engine (2) has not malfunctioned and said determination (STP2) that said main engine (2) has started.

9. Mechanical system according to any one of Claims 7 to 8, **characterized in that** said controller (80) comprises an assistance computer (82) configured to drive the auxiliary motor (70) during said assisted synchronization phase (STP3).

10. Mechanical system according to any one of Claims 7 to 9, **characterized in that** said synchronization assistance system (50) comprises a torque meter (65) measuring an engine torque developed by the main engine (2).

11. Mechanical system according to any one of Claims 7 to 10, **characterized in that** said auxiliary motor (70) is an electric motor.

12. Mechanical system according to any one of Claims 7 to 10, **characterized in that** said auxiliary motor (70) is a reversible electric machine capable of operating in motor mode and in electric generator mode.

13. Mechanical system according to any one of Claims 7 to 12, **characterized in that** said auxiliary motor (70) develops a power greater than a power which is sufficient for said upstream rotation speed to be equal to said downstream rotation speed throughout an operating range of said mechanical system (1).

14. Vehicle (100),
**characterized in that** said vehicle (100) comprises a mechanical system (1) according to any one of Claims 7 to 13.

15. Vehicle (100) according to Claim 14,
**characterized in that** said vehicle (100) is a rotorcraft, said moving part (3) being a rotor (4) of a rotary wing or a rotor (5) for controlling a yaw movement of the vehicle (100) or a propeller.
